# EUROPEAN PATENT SPECIFICATION

(11) **EP 4 290 653 B1**
(45) Date of publication and mention of the grant of the patent: **15.10.2025**
(21) Application number: 22842387.7
(22) Date of filing: 08.07.2022
(51) Int. Cl.: H01M 10/6567, H01M 10/6556, H01M 10/613, H01M 10/625, H01M 50/249, F16L 5/08

(54) **BATTERY PACK AND DEVICE INCLUDING THE SAME**
BATTERIEPACK UND VORRICHTUNG DAMIT
BLOC-BATTERIE ET DISPOSITIF LE COMPRENANT

(30) Priority: 12.07.2021 KR 20210091134
(43) Date of publication of application: 13.12.2023
(73) Proprietor: LG Energy Solution, Ltd., Seoul 07335 (KR)
(72) Inventor: SHIN, Juhwan, Daejeon 34122 (KR); HONG, Soon Chang, Daejeon 34122 (KR); YOO, Hyongseok, Daejeon 34122 (KR); KIM, Haejin, Daejeon 34122 (KR)
(74) Representative: Plasseraud IP
(86) International application number: PCT/KR2022/009995
(87) International publication number: WO 2023/287125

(56) References cited:
- EP-A1- 4 087 022
- EP-A1- 4 145 595
- CN-A- 110 212 133
- KR-A- 20120 012 648
- KR-A- 20170 068 445
- KR-A- 20180 045 373
- KR-A- 20200 017 822
- KR-A- 20200 041 007
- KR-A- 20200 107 107

## Description

### [TECHNICAL FIELD]

### Cross Citation with Related Application(s)

This application claims the benefit of Korean Patent Application No. 10-2021-0091134 filed on July 12, 2021 with the Korean Intellectual Property Office, the entire contents of which are incorporated herein by reference.

The present disclosure relates to a battery pack and a device including the same, and more particularly, to a battery pack having a water-cooled type cooling structure and a device including the same.

### [BACKGROUND]

In modem society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because it has advantages, for example, hardly exhibiting memory effects compared to nickel-based secondary batteries and thus being freely charged and discharged, and having very low self-discharge rate and high energy density.

Such a lithium secondary battery mainly uses a lithium-based oxide and a carbonaceous material as a positive electrode active material and a negative electrode active material, respectively. The lithium secondary battery comprises an electrode assembly in which a positive electrode plate and a negative electrode plate, each being coated with the positive electrode active material and the negative electrode active material, are arranged with a separator being interposed between them, and a battery case which seals and houses the electrode assembly together with an electrolyte solution.

Generally, the lithium secondary battery may be classified into a can-type secondary battery in which the electrode assembly is mounted in a metal can, and a pouch-type secondary battery in which the electrode assembly is mounted in a pouch of an aluminum laminate sheet, depending on the shape of the exterior material.

In the case of a secondary battery used for small-sized devices, two to three battery cells are arranged, but in the case of a secondary battery used for a medium- and large-sized device such as automobiles, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BMS (battery management system) and a cooling system to form a battery pack.

When a secondary battery is heated over a proper temperature, the performance of the secondary battery may deteriorate, and in severe cases, the secondary battery may be exploded or fired. In particular, a plurality of secondary batteries, that is, a battery module or a battery pack having battery cells can accumulate the heat emitted from the plurality of battery cells in a narrow space, which may raise the temperature of the battery module quickly and severely. In other words, a battery module including a large number of battery cells, and a battery pack equipped with such a battery module can obtain high output, but it is not easy to remove heat generated from the battery cells during charging and discharging. When the heat dissipation of the battery cell is not properly performed, deterioration of the battery cells is accelerated, the lifespan is shortened, and the possibility of explosion or ignition increases.

Moreover, if a medium- and large-sized battery module is included in a battery pack for a vehicle1, the battery module may be frequently exposed to direct sunlight and may be placed under high-temperature conditions, for example, in summer or in a desert.

Therefore, when configuring a battery module or battery pack, it may be very important to ensure stable and effective cooling performance. Particularly, in recent years, as the capacity of a battery module or battery pack increases, the amount of heat generation increases, wherein a water-cooled type cooling structure rather than an air-cooled type cooling structure is required to control the increased heat generation amount. In the case of a water-cooled type cooling structure, cooling performance is excellent, but a sealing structure that prevents coolant from flowing out into the battery pack is essentially required. Battery packs comprising cooling ports affixed to battery packs walls are disclosed in document CN 110212 133 A.

As the demand for increased battery pack capacity and improved heat dissipation performance are consecutive, it may be practically necessary to develop a battery pack comprising a cooling system with a stable sealing structure.

### [DETAILED DESCRIPTION OF THE INVENTION]

### [Technical Problem]

It is an object of the present disclosure to provide a battery pack which is improved in sealing property for preventing leakage of the coolant in a water-cooled type cooling structure, and assembling property in the process of realizing the cooling structure, and a device including the same.

However, the problem to be solved by embodiments of the present disclosure is not limited to the above-described problems and can be variously expanded within the scope of the technical idea included in the present disclosure.

### [Technical Solution]

According to one embodiment of the present disclosure, there is provided a battery pack according to claim 1
In realization modes:
An outer peripheral protruding part protruding toward an outer peripheral direction may be formed on an outer peripheral surface of the first tube.

The cooling connector may be hook-coupled to the outer peripheral protruding part.

The sealing member may be located between the inner peripheral surface of the opening part and the outer peripheral surface of the base protrusion part.

The inner diameter of the opening part is configured to be larger than the diameter of the base protrusion part, so that a space in which the sealing member is seated can be formed between the opening part and the base protrusion part.

The cover member may be coupled to the one surface of the base part in the first direction such that the first tube and the base protrusion part pass through the opening part.

The cover member may be located between the outer surface of the pack frame and the base part.

The cover member may be mounted to the base part by hook coupling.

The cooling port may include a second tube protruding from the base part in a second direction opposite to the first direction.

The inside of the first tube and the inside of the second tube are connected to each other, and the coolant may flow in the inside of the first tube and the inside part of the second tube.

### [Advantageous Effects]

According to embodiments of the present disclosure, a space where the sealing member is located can be formed naturally through the coupling between the cooling port and the cover member, thereby being able to improve the sealing property of the coolant circulation structure and achieving structural simplification.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view showing a battery pack according to one embodiment of the present disclosure;
Fig. 2 is a perspective view showing one of the battery modules included in the battery pack of Fig. 1;
Fig. 3 is an exploded perspective view showing a state in which the module frame is removed from the battery module of Fig. 2;
Fig. 4 is a perspective view showing one of the battery cells included in the battery module of Fig. 3;
Figs. 5 and 6 are partial perspective views which show a coupling relationship between a cooling port, a cover member, and a cooling connector according to one embodiment of the present disclosure;
Fig. 7 is a perspective view showing a cooling port according to one embodiment of the present disclosure;
Fig. 8 is a perspective view showing a state in which a cooling port and a cover member are coupled together according to one embodiment of the present disclosure;
Fig. 9 is perspective views which respectively show a cooling port and a cover member according to one embodiment of the present disclosure;
Fig. 10 is a perspective view which shows a state in which a cooling port, a cover member, and a sealing member are coupled together according to one embodiment of the present disclosure;
Fig. 11 is a partial perspective view showing a state before the first tube of the cooling port and the cooling connector are coupled inside the pack frame;
Fig. 12 is a cross-sectional view showing a cross section taken along the cutting line A-A' in Fig. 11;
Fig. 13 is a perspective view showing a cooling port according to a comparative example of the present disclosure; and
Fig. 14 is a partial perspective view showing a cooling port, a coupling bracket, and a sealing member according to another comparative example of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

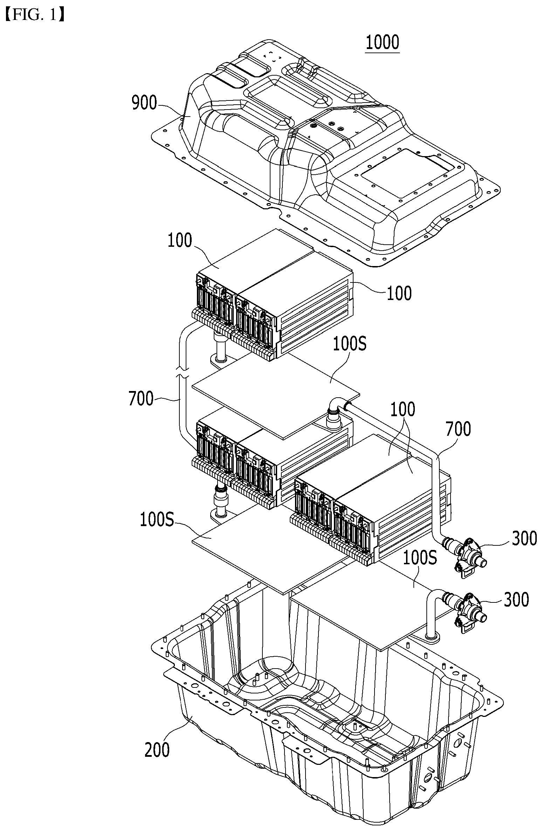

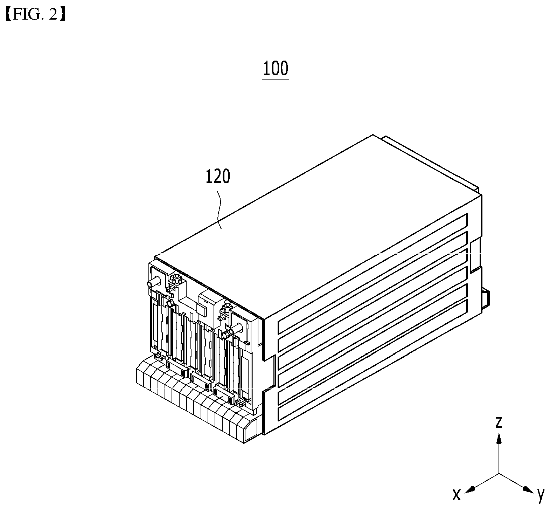

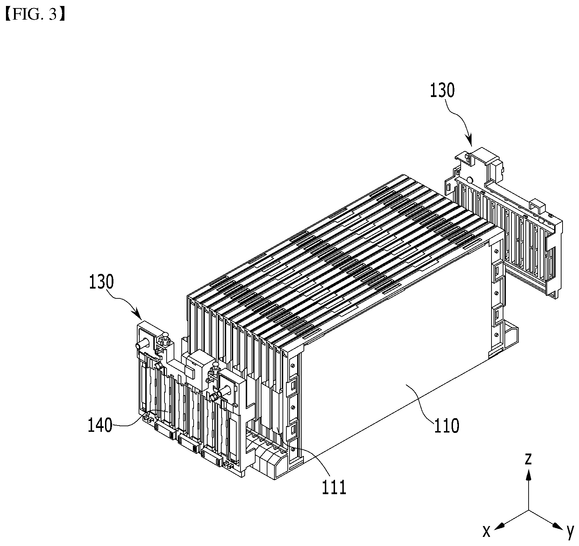

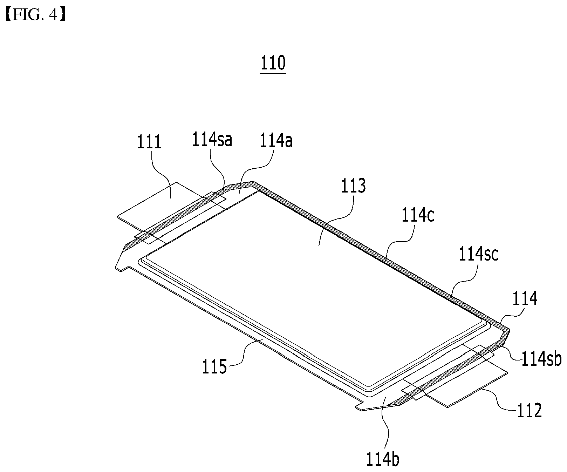

Fig. 1 is an exploded perspective view showing a battery pack according to one embodiment of the present disclosure. Fig. 2 is a perspective view showing one of the battery modules included in the battery pack of Fig. 1. Fig. 3 is an exploded perspective view showing a state in which the module frame is removed from the battery module of Fig. 2. Fig. 4 is a perspective view showing one of the battery cells included in the battery module of Fig. 3.

Referring to Figs. 1 to 4, the battery module 1000 according to one embodiment of the present disclosure includes a battery module 100 and a pack frame 200 that houses the battery module 100. The number of battery modules 100 housed in the pack frame 200 is not particularly limited, and one or a plurality of battery modules 100 can be housed.

First, the battery module 100 according to the present embodiment may include a plurality of battery cells 110 and a module frame 120 in which battery cells 110 are housed.

The battery cell 110 according to the present embodiment may be a pouch-type battery cell. Such a pouch-type battery cell may be formed by housing an electrode assembly in a pouch case of a laminated sheet including a resin layer and a metal layer, and then fusing the outer peripheral part of the pouch case. Such battery cells 110 may be formed in a rectangular sheet-like structure.

Specifically, referring to Fig. 4, the battery cell 110 according to the present embodiment may have a structure in which two electrode leads 111 and 112 face each other and protrude from one end 114a and the other end 114b of the cell main body 113, respectively. The battery cell 110 can be produced by joining both ends 114a and 114b of a battery case 114 and one side part 114c connecting them in a state in which an electrode assembly (not shown) is housed in a battery case 114. In other words, the battery cell 110 according to one embodiment of the present disclosure has a total of three sealing parts 114sa, 114sb and 114sc, wherein the sealing parts 114sa, 114sb and 114sc have a structure that is sealed by a method such as fusion, and the remaining other side part may be composed of a connection part 115. Between both ends 114a and 114b of the battery case 114 may be defined as the longitudinal direction of the battery cell 110, and between one side part 114c connecting both ends 114a and 114b of the battery case 114 and the connection part 115 may be defined as a width direction of the battery cell 110.

However, the above-mentioned battery cell 110 is an exemplary structure, and it goes without saying that a unidirectional battery cell in which two electrode leads protrude in the same direction is also possible.

The battery cell 110 may be composed by a plurality of numbers, and the plurality of battery cells 110 may be stacked so as to be electrically connected to each other. For example, as shown in Fig. 3, a plurality of battery cells 110 may be stacked along the direction parallel to the y-axis. The battery case 114 is generally formed in a laminated structure of resin layer/metal thin film layer/resin layer. For example, when the surface of the battery case is formed of an O (oriented)-nylon layer, it tends to slide easily due to external impact when stacking a plurality of battery cells to form a medium- and large-sized battery module. Therefore, in order to prevent this problem and maintain a stable stacked structure of battery cells, an adhesive member such as a cohesivetype adhesive such as a double-sided tape or a chemical adhesive bonded by chemical reaction during adhesion can be attached to the surface of the battery case to form a battery cell stack 120.

The module frame 120 is a structure for housing a plurality of battery cells 110, which may be a metal plate-shaped mono frame in which the upper surface, the lower surface, and both side surfaces are integrated. However, this is an exemplary structure, and both a form in which an upper cover is joined to a U-shaped frame with an open upper part and a form in which a U-shaped frame and an inverted U-shaped frame are coupled with each other, or the like, are all possible.

Meanwhile, referring to Fig. 3, the battery module 100 according to the present embodiment may further include a busbar frame 130 and a busbar 140 mounted on the busbar frame 130. Specifically, the busbar frame 130 can be located on the one side (x-axis direction) and the other side (-x-axis direction) of the battery cells 110, respectively. The one side (x-axis direction) and the other side (-x-axis direction) correspond to the direction in which the electrode leads 111 and 112 of the battery cells 110 protrude. A lead slit may be formed at the busbar frame 130, and the electrode leads 111 and 112 of the battery cells 110 can be bent after passing through the lead slit, and joined to the busbar 140. As long as physical and electrical connection is possible, the joining method is not particularly limited, and weld-joining can be performed as an example. That is, the battery cells 110 may be electrically connected to each other via the busbar 140.

Meanwhile, referring to Figs. 1 and 2 again, the battery pack 1000 according to the present embodiment may further include a heat sink 100S that is located on one side of the battery module 100. As an example, a heat sink 100S may be located under each battery module 100. The heat sink 100S is a component through which coolant flows, and has a function of cooling the battery module 100 that generates heat. In addition, the battery pack 1000 according to the present embodiment includes a pack coolant tube 700 housed in the pack frame 200. The pack coolant tube 700 may be connected to the heat sink 100S, and may supply the coolant to the inside of the heat sink 100S or discharge the coolant from the heat sink 100S. That is, the pack coolant tube 700 may be provided for the coolant circulation structure of the heat sink 100S.

Meanwhile, a pack cover 900 may be located in the upper part of the pack frame 200. Other electrical components including the battery module 100, the heat sink 100S, and the pack coolant tube 700 may be housed between the pack frame 200 and the pack cover 900.

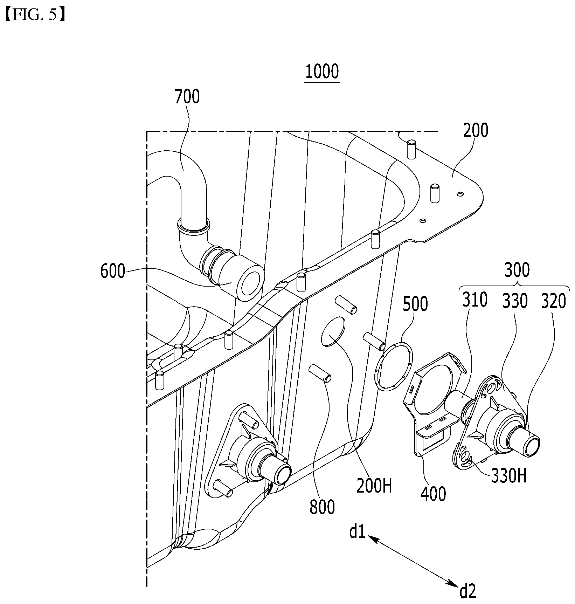

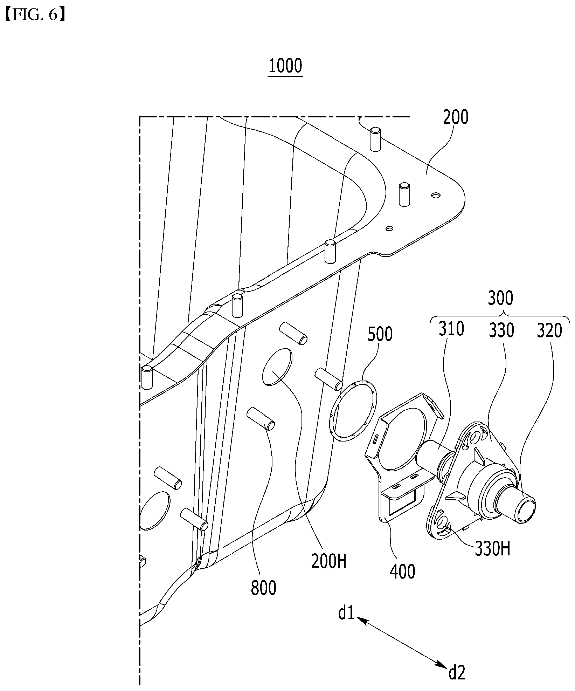

Next, the cooling port, the cover member and the cooling connector according to the present embodiment will be described with reference to Figs. 5 and 6.

Figs. 5 and 6 are partial perspective views which show a coupling relationship between a cooling port, a cover member, and a cooling connector according to one embodiment of the present disclosure. In Fig. 6, the illustration of the pack coolant tube 700 and the cooling connector 600 of Fig. 5 is omitted.

Referring to Figs. 1, 5 and 6, a through hole 200H is formed on one surface of the pack frame 200. The battery pack 1000 according to the present embodiment includes a cooling port 300 that is inserted into the through hole 200H; a cooling connector 600 that is located inside the pack frame 200 and is connected to the cooling port 300; and a cover member 400 that is coupled to the cooling port 300 and has an opening part formed therein. At this time, the pack coolant tube 700 is connected to the cooling connector 600. That is, the pack coolant tube 700 may connect the heat sink 100S and the cooling connector 600.

In the inside of the pack frame 200, a heat sink 100S of the battery module 100, a pack coolant tube 700, and a cooling connector 600 may be sequentially connected. Meanwhile, although not specifically shown in the figure, the cooling port 300 may be connected to a coolant supply/discharge system on the outside of the pack frame 200. As mentioned below, however, the cooling port 300 and the cooling connector 600 may be connected to each other via a through hole 200H formed in the pack frame 200. That is, the cooling port 300, the cooling connector 600, the pack coolant tube 700, and the heat sink 100S are sequentially connected, so that a coolant circulation structure for cooling the battery module 100 can be formed inside the battery pack 1000.

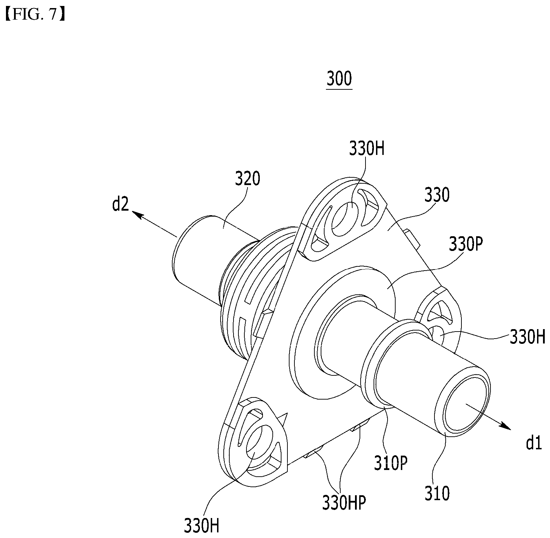

Next, the structures of the cooling port, the cover member and the cooling connector according to the present embodiment will be described in detail with reference to Figs. 7 to 10 and the like.

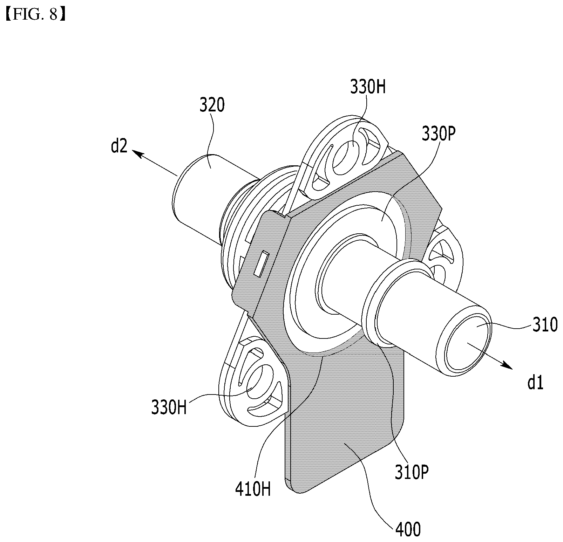

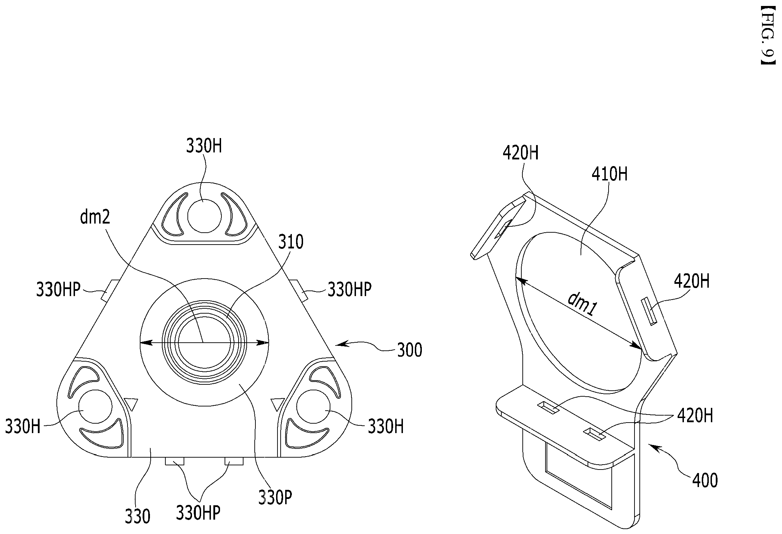

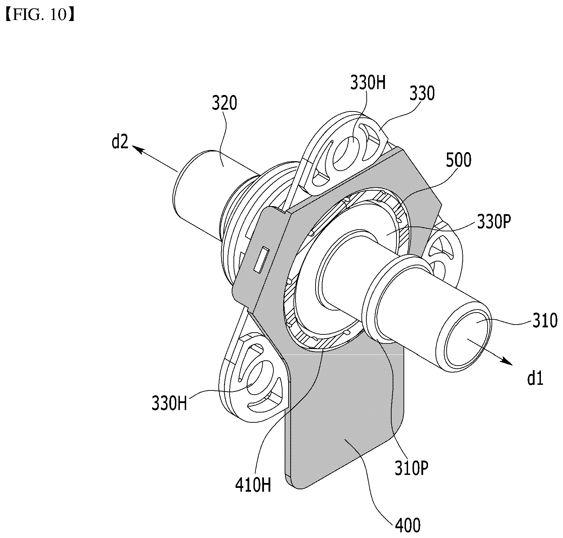

Fig. 7 is a perspective view showing a cooling port according to one embodiment of the present disclosure. Fig. 8 is a perspective view showing a state in which a cooling port and a cover member are coupled together according to one embodiment of the present disclosure. Fig. 9 is perspective views which respectively show a cooling port and a cover member according to one embodiment of the present disclosure. Fig. 10 is a perspective view which shows a state in which a cooling port, a cover member, and a sealing member are coupled together according to one embodiment of the present disclosure. In Figs. 8 and 10, the cover member 400 is shaded for convenience of explanation.

First, referring to Figs. 5 to 9 together, the cooling port 300 according to one embodiment of the present disclosure includes a plate-shaped base part 330, and a first tube 310 that protrudes from the base part 330 in the first direction d1 and passes through the through hole 200H of the pack frame 200. Here, the first direction d1 may be a direction toward the inside of the pack frame 200 from the through hole 200H. In addition, the cooling port 300 may further include a second tube 320 that protrudes from the base part 330 in a second direction d2 opposite to the first direction d1. Here, the second direction may be a direction toward the outside of the pack frame 200 from the through hole 200H. The inside of the first tube 310 and the inside of the second tube 320 are connected to each other, and the coolant may flow in the inside of the first tube 310 and the inside of the second tube 320. The base part 330 includes a base protrusion part 330P formed on one surface of the base part 330 in the first direction d1. The base part 330 is illustrated as a plate-shaped member with rounded corners, but the shape thereof is not particularly limited as long as it is a plate-shaped member.

Referring to Figs. 7 to 10, the cover member 400 having an opening part 410H formed therein is coupled to the cooling port 300 as described above. At this time, the sealing member 500 is located between the opening part 410H of the cover member 400 and the base protrusion part 330P. The sealing member 500 is an O-ring shaped member, and prevents coolant from leaking between the cooling port 300 and the through hole 200H.

Specifically, the cover member 400 may be coupled to one surface of the base part 330 in the first direction d1 such that the first tube 310 and the base protrusion part 330P pass through the opening part 410H. Thereby, as shown in Fig. 6, the cover member 400 may be located between the outer surface of the pack frame 200 and the base part 330 of the cooling port 300.

At this time, the opening part 410H may have a circular hole shape, and the base protrusion part 330P may also be a cylindrical protrusion part so as to correspond thereto. The inner diameter dm1 of the opening part 410H is configured to be larger than the diameter dm2 of the base protrusion part 330P, so that a space in which the sealing member 500 is seated can be formed between the opening part 410H and the base protrusion part 330P. That is, the sealing member 500 according to the present embodiment may be and is, according to the invention, located between the inner peripheral surface of the opening part 410H and the outer peripheral surface of the base protrusion part 330P. More specifically, the sealing member 500 is fixed between the inner peripheral surface of the opening part 410H and the outer peripheral surface of the base protrusion part 330P, thereby being able to interrupt outflow of coolant between the cooling port 300 and the outer surface of the pack frame 200.

Meanwhile, the coolant use herein is a medium for cooling, and is not particularly limited, but cooling water may be used as an example. That is, the battery pack 1000 according to the present embodiment may have a water-cooled type cooling structure.

Meanwhile, the cover member 400 and the base part 330 according to the present embodiment may be fastened by a physical method. For example, the cover member 400 according to the present embodiment may be mounted to the base portion 330 by hook coupling. Specifically, hook protrusion parts 330HP may be formed on each side of the base part 330, and a hook groove 420H may be formed in the cover member 400 so as to correspond to the hook protrusion part 330HP. The cover member 400 and the base part 330 may be hook-coupled in such a way that the hook protrusion part 330HP is inserted into the hook groove 420H. However, this corresponds to one example, and as another embodiment, a hook protrusion part may be formed in the cover member and a hook groove may be formed in the base part. The number of hook projection parts and hook grooves are not particularly limited.

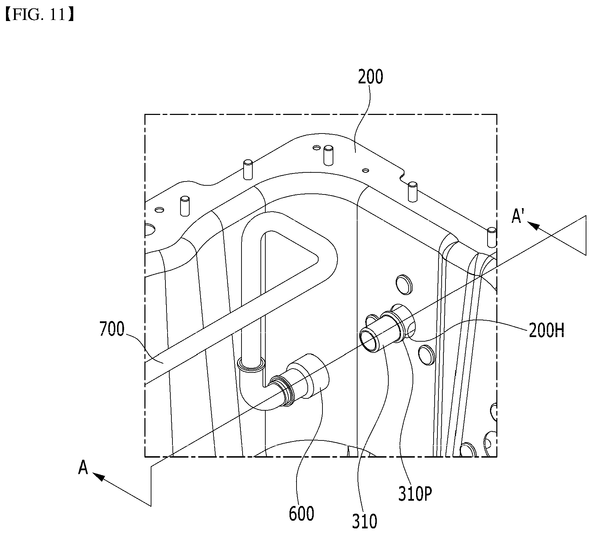

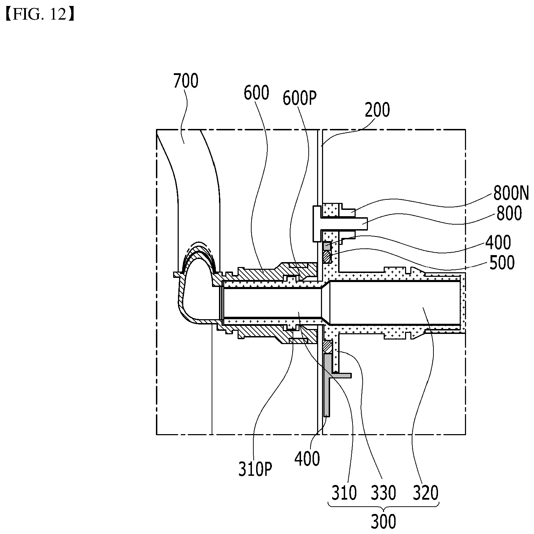

Next, the connection relationship between the first tube of the cooling port and the cooling connector according to the present embodiment will be described in detail with reference to Figs. 11 and 12.

Fig. 11 is a partial perspective view showing a state before the first tube of the cooling port and the cooling connector are coupled inside the pack frame. Fig. 12 is a cross-sectional view showing a cross section taken along the cutting line A-A' in Fig. 11. In particular, Fig. 12 is a cross-sectional view which assumes and shows a state where the cooling connector 600 and the first tube 310 of the cooling port 300 in Fig. 11 are coupled to each other.

Referring to Figs. 10 to 12, in a state where the first tube 310 of the cooling port 300 according to the present embodiment passes through the through hole 200H of the pack frame 200, the cooling connector 600 can be coupled to the first tube 310. Also, as described above, the cooling connector 600 may be connected to the pack coolant tube 700. Meanwhile, on the outside of the pack frame 200, a state in which the sealing member 500 is located between the inner peripheral surface of the opening part 410H and the outer peripheral surface of the base protrusion part 330P is illustrated.

An outer peripheral protruding part 310P protruding toward an outer peripheral direction may be formed on the outer peripheral surface of the first tube 310, and an inner peripheral protruding part 600P may be formed on an inner peripheral surface of the cooling connector 600. As shown in Fig. 12, when the first tube 310 is inserted into the cooling connector 600, the inner peripheral protrusion part 600P of the cooling connector 600 may be hook-coupled to the outer peripheral protrusion part 310P of the first tube 310. In this manner, the first tube 310 and the cooling connector 600 may be coupled to each other in the inside of the pack frame 200.

Meanwhile, referring to Figs. 6, 7, 9 and 12 together, a base hole 330H may be formed in the base part 330 according to the present embodiment, and a bolt part 800 may be located on the outer surface of the pack frame 200. The bolt part 800 passes through the base hole 330H, and then can be coupled to a nut part 800N. That is, the base part 330 may be fixed to the pack frame 200 in a bolt/nut coupling manner. The triangular base part 330 is illustrated, but the shape thereof is not particularly limited as long as it has a plate-like shape so that it can be fixed to the pack frame 200. The number of base holes 330H is also not particularly limited.

As described above, the second tube 320 according to the present embodiment protrudes in the second direction d2 toward the outside of the pack frame 200 from the through hole 200H, and may be connected to a coolant supply/discharge system outside the battery pack 1000. As an example, it may be connected to an external cooling tube or a cooling motor.

Advantages of the cooling port, the cover member, and the sealing member according to the present embodiment will be described below in comparison with comparative examples.

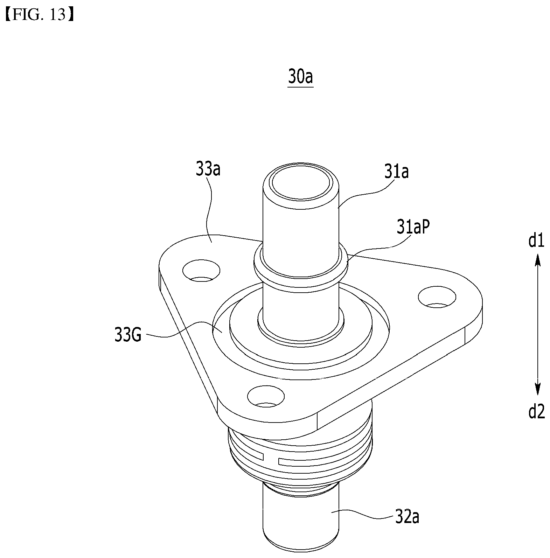

Fig. 13 is a perspective view showing a cooling port according to a comparative example of the present disclosure.

Referring to Fig. 13, a cooling port 30a according to a comparative example of the present disclosure may include a first tube 31a, a second tube 32a, and a base part 33a. The first tube 31a protrudes in a first direction d1, and the second tube 32a protrudes in a second direction d2 opposite to the first direction d1. The inside of the first tube 31a and the inside of the second tube 32a are connected to each other, so that a coolant can flow in the inside of the first tube 31a and the inside of the second tube 32a.

The first pipe 31a may be formed with an outer peripheral protruding part 31aP protruding toward an outer peripheral direction to be coupled with the cooling connector. At this time, the base part 33a may be formed with a recessed part 33G that is recessed so that an O-ring-shaped sealing member (not shown) is mounted.

In the manufacture of the cooling port 30a, an injection molding method can be used. In the injection molding method, however, in order to form the first tube 31a and the recessed part 33G, the mold must be pulled out in the first direction d1 or the second direction d2. In this case, the outer peripheral protruding part 31aP having a shape of protruding in directions perpendicular to the first and second directions d1 and d2 is hooked. As a result, when the cooling port 30a shown in Fig. 13 is manufactured by injection molding, there is a problem that an undercut occurs in the outer peripheral protruding part 31aP. That is, the outer peripheral protruding part 31aP and the recessed part 33G having a shape of being recessed cannot be simultaneously manufactured by injection molding.

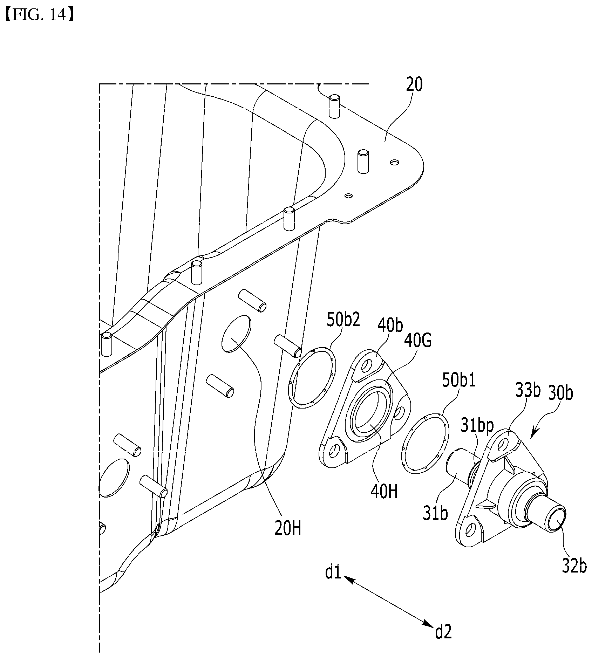

Fig. 14 is a partial perspective view showing a cooling port, a coupling bracket, and a sealing member according to another comparative example of the present disclosure.

Referring to Fig. 14, a cooling port 30b according to another comparative example of the present disclosure may include a first tube 31b, a second tube 32b, and a base part 33b. The first tube 31b protrudes in the first direction d1, and the second tube 32b protrudes in a second direction d2 opposite to the first direction d1. The inside of the first tube 31b and the inside of the second tube 32b are connected to each other, so that a coolant can flow in the inside of the first tube 31b and the inside of the second tube 32b. The first tube 31b may pass through the through hole 20H of the pack frame 20. An outer peripheral protruding part 31bp protruding toward an outer peripheral direction may be formed in the first tube 31b to be coupled with the cooling connector.

In order to solve the above problem associated with the cooling port 30a shown in Fig. 13, a separate coupling bracket 40b is added instead of forming a recessed part in the base part 33b of the cooling port 30b.

The coupling bracket 40b is located between the outer surface of the pack frame 20 and the base part 33b. An opening hole 40H is formed in the coupling bracket 40b, and the first tube 31b may pass through the opening hole 40H.

O-ring shaped sealing members 50b1 and 50b2 may be located both between the coupling bracket 40b and the base part 33b and between the coupling bracket 40b and the outer surface of the pack frame 20, respectively. Bracket recessed grooves 40G may be formed on each of both surfaces of the coupling bracket 40b so that the sealing members 50b1 and 50b2 can be seated.

That is, in this comparative example, a separate coupling bracket 40b having a bracketrecessed groove 40G is added without forming a recessed groove in the base part 33b itself in order to prevent the occurrence of undercut. However, since it is a form in which the coupling bracket 40b is interposed, the areas where a seal member must be added to prevent outflow of a coolant are increased to two places, between the coupling bracket 40b and the base part 33b and between the coupling bracket 40b and the outer surface of the pack frame 20. Undercut does not occur, but there is a drawback that the two sealing members 50b1 and 50b2 are required and the number of unnecessary parts increases. In addition, in the process of coupling between parts, the assembly position between the two sealing members 50b1 and 50b2, the coupling bracket 40b, and the base part 33b must be finely set, which complicates the manufacturing process. In other words, increasing the area where the sealing members 50b1 and 50b2 are required means increasing the area where the coolant can flow out. That is, it can be seen that the sealing property for preventing leakage of the coolant is deteriorated.

Meanwhile, the cooling port 300 according to the present embodiment can naturally provide a space where the sealing member 500 is located through coupling with the cover member 400. Therefore, defects such as undercuts do not occur in the manufacturing process, and there is no need to additionally interpose a sealing member. This leads to the advantage of reducing the required configuration and materials and potentially reducing costs. In addition, since it can be simply manufactured by mechanical coupling between the base part 330 and the cover member 400, the structure is simplified and the manufacturing process is simple. In addition, since the area where the sealing member is required is reduced as compared to the cooling port 30b of Fig. 14, it has the advantage that the risk of coolant outflow is small.

The terms representing directions such as the front side, the rear side, the left side, the right side, the upper side, and the lower side have been used in the present embodiment, but the terms used are provided simply for convenience of description and may become different according to the position of an object, the position of an observer, or the like.

One or more battery modules according to the present embodiment described above can be mounted together with various control and protection systems such as BMS (battery management system), an BDU (battery disconnect unit) and a cooling system to form a battery pack.

The battery pack can be applied to various devices. Specifically, it can be applied to vehicle means such as an electric bike, an electric vehicle, and a hybrid electric vehicle, or ESS (Energy Storage System), but is not limited thereto and can be applied to various devices capable of using a secondary battery.

Although preferred embodiments of the present disclosure have been shown and described above, the scope of the present disclosure is not limited thereto, and numerous changes and modifications can be devised by those skilled in the art using the principles of the invention defined in the appended claims.

### [Description of Reference Numerals]

1000: battery pack
100: battery module
300: cooling port
400: cover member
500: sealing member
600: cooling connector
700: pack coolant tube

## Claims

1. A battery pack (1000) comprising:
a battery module (100);
a pack frame (200) that houses the battery module and has a through-hole (200H) formed on one surface thereof;
a cooling port (300) that is inserted into the through hole (200H);
wherein the cooling port (300) includes a plate-shaped base part (330) and a first tube (310) that protrudes from the base part (330) in a first direction (d1) and passes through the through hole (200H),
**characterized in that** it comprises:
a cooling connector (600) that is located inside the pack frame and is connected to the cooling port (300);
a cover member (400) that is coupled to the cooling port (300) and has an opening part formed therein; and
a pack coolant tube (700) that is connected to the cooling connector (600),
wherein the base part (330) includes a base protrusion part (330P) formed on one surface of the base part in the first direction, and
wherein a sealing member (500) is located between the opening part (410H) of the cover member and the base protrusion part (330P), the sealing member (500) being located between the inner peripheral surface of the opening part (410H) and the outer peripheral surface of the base protrusion part (330P) and wherein:
the cooling connector (600) is coupled to the first tube (310) in a state where the first tube (310) passes through the through hole (200H).

2. The battery pack according to claim 1, wherein:
an outer peripheral protruding part (310P) protruding toward an outer peripheral direction is formed on an outer peripheral surface of the first tube (310).

3. The battery pack according to claim 2, wherein:
the cooling connector (600) is hook-coupled to the outer peripheral protruding part (310P).

4. The battery pack according to claim 1, wherein:
the sealing member (500) is located between an inner peripheral surface of the opening part (410H) and an outer peripheral surface of the base protrusion part (330P).

5. The battery pack according to claim 1, wherein:
an inner diameter of the opening part (410H) is configured to be larger than a diameter of the base protrusion part (330P), so that a space in which the sealing member (500) is seated is formed between the opening part (410H) and the base protrusion part (330P).

6. The battery pack according to claim 1, wherein:
the cover member (400) is coupled to the one surface of the base part (330) in the first direction such that the first tube (310) and the base protrusion part pass (330P) through the opening part.

7. The battery pack according to claim 1, wherein:
the cover member (400) is located between an outer surface of the pack frame (200) and the base part (330).

8. The battery pack according to claim 1, wherein:
the cover member (400) is mounted to the base part (330) by hook coupling.

9. The battery pack according to claim 1, wherein:
the cooling port (300) includes a second tube (320) protruding from the base part in a second direction (d2) opposite to the first direction (d1).

10. The battery pack according to claim 9, wherein:
an inside of the first tube (310) and an inside of the second tube (320) are connected to each other, and
the coolant flows in the inside of the first tube (310) and the inside part of the second tube (320).

11. A device comprising the battery pack as set forth in claim 1.

## Patentansprüche

1. Batteriepack (1000), umfassend:
ein Batteriemodul (100);
einen Packrahmen (200), welcher das Batteriemodul beherbergt und ein an einer Fläche davon gebildetes Durchgangsloch (200H) aufweist;
eine Kühlungsmündung (300), welche in das Durchgangsloch (200H) eingesetzt ist;
wobei die Kühlungsmündung (300) einen plattenförmigen Basisteil (330) und
eine erste Röhre (310) umfasst, welche von dem Basisteil (330) in eine erste Richtung (d1) hervorsteht und durch das Durchgangsloch (200H) passiert,
**dadurch gekennzeichnet, dass** er umfasst:
einen Kühlverbinder (600), welcher innerhalb des Packrahmens angeordnet und mit der Kühlungsmündung (300) verbunden ist;
ein Abdeckungselement (400), welches mit der Kühlungsmündung (300) gekoppelt ist und einen darin geformten Öffnungsteil aufweist; und
eine Packkühlmittelröhre (700), welche mit dem Kühlverbinder (600) verbunden ist,
wobei der Basisteil (330) einen Basisvorstandsteil (330P) umfasst, welcher an einer Fläche des Basisteils in die erste Richtung gebildet ist, und
wobei ein Dichtungselement (500) zwischen dem Öffnungsteil (410H) des Abdeckungselements und dem Basisvorstandsteil (330P) angeordnet ist, wobei das Dichtungselement (500) zwischen der inneren, peripheren Fläche des Öffnungsteils (410H) und der äußeren peripheren Fläche des Basisvorstandsteils (330P) angeordnet ist, und wobei:
der Kühlverbinder (600) mit der ersten Röhre (310) in einem Zustand gekoppelt ist, in welchem die erste Röhre (310) durch das Durchgangsloch (200H) passiert.

2. Batteriepack nach Anspruch 1, wobei:
ein äußerer, peripherer Vorstandsteil (310P), welcher zu einer äußeren peripheren Richtung hervorsteht, an einer äußeren peripheren Fläche der ersten Röhre (310) gebildet ist.

3. Batteriepack nach Anspruch 2, wobei:
der Kühlverbinder (600) mit dem äußeren peripheren Vorstandsteil (310P) hakengekoppelt ist.

4. Batteriepack nach Anspruch 1, wobei:
das Dichtungselement (500) zwischen einer inneren, peripheren Fläche des Öffnungsteils (410H) und einer äußeren, peripheren Fläche des Basisvorstandsteils (330P) angeordnet ist.

5. Batteriepack nach Anspruch 1, wobei:
ein innerer Durchmesser des Öffnungsteils (410H) dazu eingerichtet ist, größer als ein Durchmesser des Basisvorstandsteils (330P) zu sein, sodass ein Raum, in welchem das Dichtungselement (500) gelegen ist, zwischen dem Öffnungsteil (410H) und dem Basisvorstandsteil (330P) gebildet ist.

6. Batteriepack nach Anspruch 1, wobei:
das Abdeckungselement (400) mit der einen Fläche des Basisteils (330) in der ersten Richtung derart gekoppelt ist, dass die erste Röhre (310) und der Basisvorstandsteil (330P) durch den Öffnungsteil passieren.

7. Batteriepack nach Anspruch 1, wobei:
das Abdeckungselement (400) zwischen einer äußeren Fläche des Packrahmens (200) und dem Basisteil (330) angeordnet ist.

8. Batteriepack nach Anspruch 1, wobei:
das Abdeckungselement (400) an dem Basisteil (330) durch Hakenkopplung montiert ist.

9. Batteriepack nach Anspruch 1, wobei:
die Kühlungsmündung (300) eine zweite Röhre (320) umfasst, welche von dem Basisteil in eine zweite Richtung (d2) entgegengesetzt zu der ersten Richtung (d1) hervorsteht.

10. Batteriepack nach Anspruch 9, wobei:
ein Inneres der ersten Röhre (310) und ein Inneres der zweiten Röhre (320) miteinander verbunden sind, und
das Kühlmittel in dem Inneren der ersten Röhre (310) und dem Innenteil der zweiten Röhre (320) fließt.

11. Vorrichtung umfassend den Batteriepack nach Anspruch 1.

## Revendications

1. Pack-batterie (1000) comprenant :
un module de batterie (100) ;
un cadre de pack (200) qui reçoit le module de batterie et a un trou traversant (200H) formé sur une surface de celui-ci ;
un orifice de refroidissement (300) qui est inséré dans le trou traversant (200H) ;
dans lequel l'orifice de refroidissement (300) comprend une partie de base (330) en forme de plaque et un premier tube (310) qui fait saillie à partir de la partie de base (330) dans une première direction (d1) et passe à travers le trou traversant (200H), **caractérisé en ce qu'**il comprend :
un raccord de refroidissement (600) qui est situé à l'intérieur du cadre de pack et est relié à l'orifice de refroidissement (300) ;
un élément couvercle (400) qui est accouplé à l'orifice de refroidissement (300) et a une partie d'ouverture formée dans celui-ci ; et
un tube de liquide de refroidissement de pack (700) qui est relié au raccord de refroidissement (600),
dans lequel la partie de base (330) comprend une partie saillie de base (330P) formée sur une surface de la partie de base dans la première direction, et
dans lequel un élément d'étanchéité (500) est situé entre la partie d'ouverture (410H) de l'élément couvercle et la partie saillie de base (330P), l'élément d'étanchéité (500) étant situé entre la surface périphérique intérieure de la partie d'ouverture (410H) et la surface périphérique extérieure de la partie saillie de base (330P) et dans lequel :
le raccord de refroidissement (600) est accouplé au premier tube (310) dans un état où le premier tube (310) passe à travers le trou traversant (200H).

2. Pack-batterie selon la revendication 1, dans lequel :
une partie saillante périphérique extérieure (310P) faisant saillie vers une direction périphérique extérieure est formée sur une surface périphérique extérieure du premier tube (310).

3. Pack-batterie selon la revendication 2, dans lequel :
le raccord de refroidissement (600) est accouplé par crochet à la partie saillante périphérique extérieure (310P).

4. Pack-batterie selon la revendication 1, dans lequel :
l'élément d'étanchéité (500) est situé entre une surface périphérique intérieure de la partie d'ouverture (410H) et une surface périphérique extérieure de la partie saillie de base (330P).

5. Pack-batterie selon la revendication 1, dans lequel :
un diamètre intérieur de la partie d'ouverture (410H) est configuré pour être plus grand qu'un diamètre de la partie saillie de base (330P), de façon à ce qu'un espace dans lequel l'élément d'étanchéité (500) est placé soit formé entre la partie d'ouverture (410H) et la partie saillie de base (330P).

6. Pack-batterie selon la revendication 1, dans lequel :
l'élément couvercle (400) est accouplé à la surface de la partie de base (330) dans la première direction de telle sorte que le premier tube (310) et la partie saillie de base (330P) passent à travers la partie d'ouverture.

7. Pack-batterie selon la revendication 1, dans lequel :
l'élément couvercle (400) est situé entre une surface extérieure du cadre de pack (200) et la partie de base (330).

8. Pack-batterie selon la revendication 1, dans lequel :
l'élément couvercle (400) est monté sur la partie de base (330) par accouplement par crochet.

9. Pack-batterie selon la revendication 1, dans lequel :
l'orifice de refroidissement (300) comprend un second tube (320) faisant saillie à partir de la partie de base dans une seconde direction (d2) opposée à la première direction (d1).

10. Pack-batterie selon la revendication 9, dans lequel :
un intérieur du premier tube (310) et un intérieur du second tube (320) sont reliés l'un à l'autre, et
le liquide de refroidissement s'écoule dans l'intérieur du premier tube (310) et la partie intérieure du second tube (320).

11. Dispositif comprenant le pack-batterie selon la revendication 1.
